(19)

**Europäisches Patentamt**
**European Patent Office**
**Office européen des brevets**

(11)  **EP 4 557 182 A1**

(12)  **EUROPEAN PATENT APPLICATION**

(43) Date of publication:
**21.05.2025  Bulletin 2025/21**

(21) Application number: **24213028.4**

(22) Date of filing: **14.11.2024**

(51) International Patent Classification (IPC):
***G06N 10/60*** *(2022.01)*

(52) Cooperative Patent Classification (CPC):
**G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.11.2023  EP 23210590
30.11.2023  EP 23213307
26.07.2024  IT 202400017473**

(71) Applicant: **Leonardo S.p.a.
00195 Roma (IT)**

(72) Inventors:
• **PROIETTI, Massimiliano
00195 Roma (IT)**

• **KOUDIA, Seid
00195 Roma (IT)**
• **FERRARA, Pasquale
00195 Roma (IT)**
• **CEROCCHI, Filippo
00195 Roma (IT)**
• **LOFFREDA, Massimo
00195 Roma (IT)**
• **CENCI, Francesco
00195 Roma (IT)**
• **DISPENZA, Massimiliano
00195 Roma (IT)**

(74) Representative: **Studio Torta S.p.A.
Via Viotti, 9
10121 Torino (IT)**

(54)  **MULTI-TARGET TRACKING SYSTEM**

(57)  Multi-target tracking software (3) loadable in and
executable by electronic processing resources (4) comprising at least one quantum computer (4Q). The multi-
target tracking software (3) is designed to cause, when
executed, the electronic processing resources (4) to
become configured to receive unlabelled data (2) indicative of positions of targets, in particular vehicles, to be
tracked; the unlabelled data (2) failing to be indicative of
the identities of the targets. In addition, the multi-target
tracking software (3) is designed to cause, when executed, the electronic processing resources (4) to become
configured to compute candidate tracks (11), that may
possibly be followed by the targets, based on the re-
ceived unlabelled data (2); and to compute an initial
quantum state representative of said candidate tracks
(11). The multi-target tracking software (3) is further
designed to cause, when executed, the electronic processing resources (4) to become configured to compute,
by means of a quantum optimization model (14), a final
quantum state representative of final tracks (5), that may
actually be followed by the targets, based on the initial
quantum state. Furthermore, the multi-target tracking
software (3) is designed to cause, when executed, the
electronic processing resources (4) to become config-
ured to compute and output a multi-target tracking output
based on the final quantum state.

FIG.2

**Description**

CROSS-REFERENCE TO RELATED APPLICATIONS

This patent application claims priority to European patent applications Nos. 23210590.8 and 23213307.4 filed on November 17, 2023 and November 30, 2023, respectively, and to Italian patent application No. 102024000017473 filed on July 26, 2024.

TECHNICAL FIELD OF THE INVENTION

The present invention relates, in general, to a surveillance system for monitoring a predefined environment; in particular, it relates to a tracking system.

In detail, the present invention relates to an innovative multi-target tracking system based on quantum technology.

STATE OF THE ART

As it is known, multi-target tracking (MTT) relates to the estimation of targets', or objects', tracks over time using a single or multiple sensors.

The development of modern tracking systems requires a wide variety of algorithms ranging from gating (preprocessing), state and bias estimation, and development of likelihood ratios for data association. The central problem is the data association problem of partitioning sensor reports into tracks and false alarms.

Nowadays, classical algorithms are implemented for multi-target tracking, such as the multi-hypothesis tracking (MHT) .

In particular, the MHT algorithm can provide an exact solution only for a number of radar scans equals to two. It cannot find, with polynomial resources, any exact solution for a number of radar scans greater than two.

OBJECT AND SUMMARY OF THE INVENTION

The Applicant has carried out an in-depth study in order to develop an innovative multi-target tracking software based on quantum computing.

Therefore, the object of the present invention is to provide a multi-target tracking software which at least partly solves the problems of the known prior art. In particular, the provided solution allows to find several tracks, at the same time, for any number of radar scans and detections. In addition, the presented solution is not subject to the issue of requiring exponential resources to find an approximate solution with an higher degree of approximation (not achievable with classical algorithms) asymptotically reaching the exact solution.

According to the present invention, there is provided a multi-target tracking software as claimed in the appended claims.

In particular, there is provided a multi-target tracking software loadable in and executable by electronic processing resources comprising at least one quantum computer. The multi-target tracking software is designed to cause, when executed, the electronic processing resources to become configured to receive unlabelled data indicative of positions of targets, in particular vehicles, to be tracked; the unlabelled data failing to be indicative of the identities of the targets. In addition, the multi-target tracking software is designed to cause, when executed, the electronic processing resources to become configured to compute candidate tracks, that may possibly be followed by the targets, based on the received unlabelled data. The multi-target tracking software is further designed to cause, when executed, the electronic processing resources to become configured to compute, based on the candidate tracks, an initial quantum state representative of said candidate tracks. In addition, the multi-target tracking software is designed to cause, when executed, the electronic processing resources to become configured to compute, by means of a quantum optimization model a final quantum state representative of final tracks, that may actually be followed by the targets, based on the initial quantum state. Furthermore, the multi-target tracking software is designed to cause, when executed, the electronic processing resources to become configured to compute and output a multi-target tracking output based on the final quantum state.

BRIEF DESCRIPTION OF THE DRAWINGS

- Figure 1 schematically illustrates a multi-target tracking system according to a preferred embodiment of the present invention;

- Figure 2 schematically illustrates a logical architecture of a multi-target tracking software according to an embodiment of the present invention; and
- Figure 3 schematically illustrates a logical architecture of the multi-target tracking software according to an embodiment of the present invention.

DESCRIPTION OF THE INVENTION

The invention will now be described in detail with reference to the accompanying figures, so as to allow a person skilled in the art to carry it out and use it. Possible changes to the embodiments described herein will be immediately evident to skilled people and the generic principles described herein can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the features described and claimed herein.

If not specifically defined otherwise, all technical and scientific terms have the meaning commonly used by people ordinarily skilled in the industry to which the invention belongs. In case of conflict, the description - including the definitions provided therein - is binding. Furthermore, the examples are provided by mere way of explanation and, as such, should not be considered as limiting.

In particular, the block diagrams included in the accompanying figures and described below should not be interpreted as representation of structural features, namely as constructive limits, but they should be regarded as representation of functional features, i.e. intrinsic properties of the devices defined by the obtained effects, namely as functional limits, which can be implemented in different manners, hence so as to protects the functionality thereof (possibility of functioning).

In order to make it easier for readers to understand the embodiments described herein, reference is made to some specific embodiments and a specific language will be used to describe them. The terms used in this document are aimed at exclusively describing particular examples and are not suited to limit the scope of protection of the invention.

It should be noted that, hereinafter, the term track refers to a series of points, specifically indicative of a series of different positions, representing the path or trajectory that a target follows from a starting point to a destination.

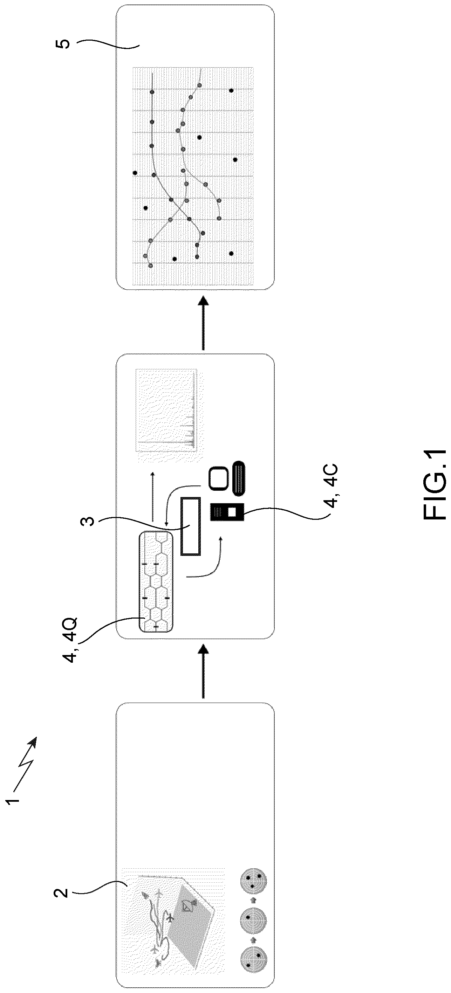

Figure 1 schematically illustrates a multi-target tracking system 1 according to a preferred embodiment of the present invention.

The multi-target tracking system 1 is configured to compute, and to output, a multi-target tracking output based on a plurality of unlabeled data 2 (i.e., radar detections after any number of scans); in particular, to compute and to output a plurality of targets' tracks 5. In a way of example, the multi-target tracking system 1 is configured to cause the displaying of a graphic representation, in particular a graph or a diagram, of the computed tracks.

The proposed invention applies naturally to radar tracking, but its principle can be applied whenever a set of unlabeled data should be assigned to a common label, like the track in radar systems. In the followings, explicit reference will be made to a radar system by way of example only, but not by way of limitation or restriction. The present invention can be used with any sensor equipped with/connected to processing units via one or more wired and/or wireless technologies. In particular, it applies to all those scenarios where a set of unlabelled data 2 has to be associated with some given target association, for example to other tracking sensors or more in general to surveillance systems. Therefore, the present invention can be applied, but is not limited to, radar target tracking.

The multi-target tracking system 1 comprises electronic processing resources 4 comprising at least one quantum computer 4Q; wherein, said electronic processing resources 4 store, and are configured to execute, a multi-target tracking software 3, or a computer product, designed to compute a number (conveniently, at least two) of target tracks. According to an aspect of the present invention, the quantum computer 4Q is superconductive or photonic or atomic.

In detail, the electronic processing resources 4 further comprise at least one classical computer 4C, or a non-quantum computer.

The multi-target tracking software is loadable in and executable by the electronic processing resources 4 and is designed to cause, when executed, the electronic processing resources 4 to become configured to compute a set of tracks of several targets, in particular vehicles, based on unlabelled data 2 and a quantum optimization model 14. In particular, the electronic processing resources 4 are configured to provide a set of tracks formed after an assignment (block 10) of the unlabeled data to several targets, such that the obtained tracks correspond to the actual target tracks. In a way of example, said targets are aircrafts, or unmanned aerial vehicle (UAV); but they could be of any type of objects, either on the land or on the sea.

With regard to the target tracks computation, it is emphasized that the operations that must be implemented to realize such functionality and not the hardware and software architectures with which such operations are implemented; these could be implemented through a concentrated architecture, for example a single electronic device such as an automotive ECU (Electronic Control Unit), or through a distributed cooperative architecture, comprising several electronic devices in communication and cooperating with each other, according to a proprietary logical architecture that the manufacturer of the multi-target tracking system 1 will decide to adopt.

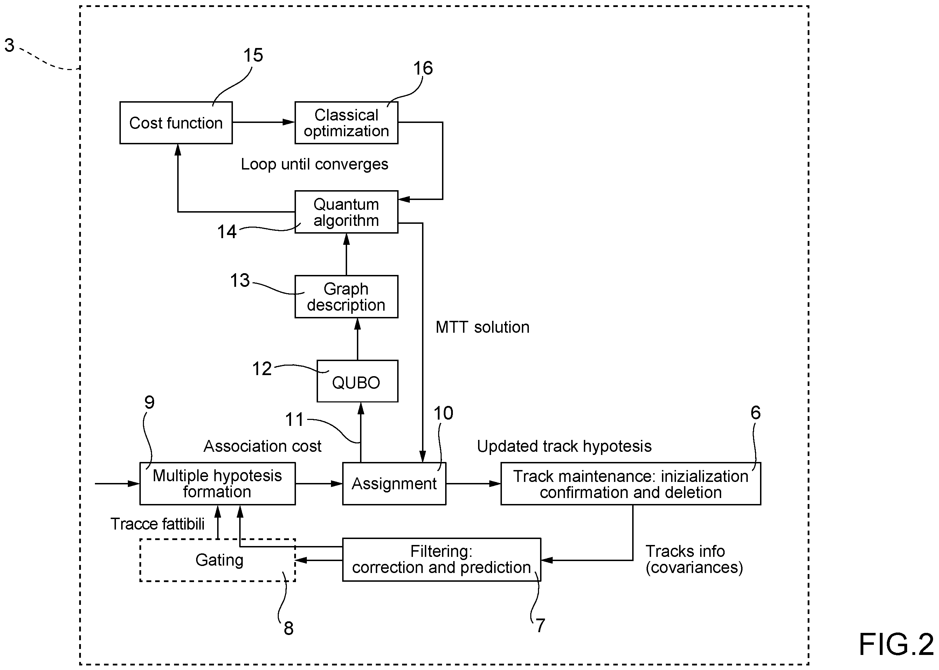

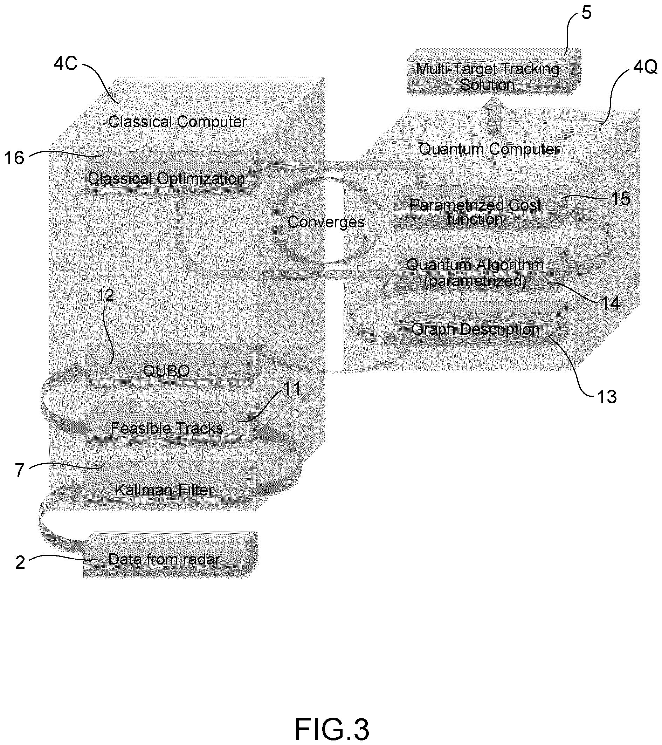

Figure 2 and Figure 3 schematically illustrate logical architectures of a multi-target tracking software 3 according to an embodiment of the present invention.

The electronic processing resources 4 are configured to receive unlabelled data 2 indicative of positions of targets, in particular vehicles, to be tracked (in detail, within an environment to be monitored); the unlabelled data 2 failing to be indicative of the identities of the targets. In particular, the unlabelled data 2 fail to provide information indicative of the identities of the targets. In effect, the unlabelled data 2 are unlabelled with respect to the identities of the targets; and, in detail, the aim of the multi-target tracking software 3 is to determine the identities of the targets, in detail assign the positions to the corresponding targets, based on the unlabelled data 2 by executing operations of optimization.

In detail, the electronic processing resources 4 are configured to receive said unlabelled data 2 from one or more sensors.

Optionally, the multi-target tracking system 1 comprises these sensors. In a way of example, said sensors comprise one or more radars or Lidar (Laser Imaging Detection and Ranging) or sonar or visual sensors. In detail, said sensors are configured to measure or detect one or more scan detections, in more detail scan radar detections, representing an environment to be monitored; for example, the scan detections are images of said environment. In a way of example, the environment to be monitored is a portion, which it is intended to be monitored, of the sky.

In more detail, said sensors comprise a number of physical sensors configured to detect or capture the scan detections, and conveniently at least one virtual sensor configured to compute unlabelled data 2 based on a plurality of scan detections received in input from the physical sensors. In particular, each unlabelled data 2 is indicative of a target's position within the environment to be monitored and is associated with a detection time instant provided by one of the physical sensors. In particular, target's position coordinates are appreciable on each unlabelled data 2.

In detail, a virtual sensor is a software-based tool that estimates physical or environmental quantities using mathematical models, algorithms, or data from other physical sensors; unlike physical sensors, which directly measure physical quantities, virtual sensors derive their measurements indirectly (often through computational methods and sensor fusion techniques).

In particular, one of the physical sensors is configured to sense and output an information indicative of the detection time instant, which is indicative of the time in which the detection was performed by said physical sensor. In a way of example, the detection time instant is either internal to the system or absolute and it is expressed as non-negative number.

Optionally, the virtual sensor is configured to identify or detect the presence and the position of one target by means of an object detection technique.

Conveniently, the unlabelled data 2 comprise polar coordinates (range, azimuth, elevation) or cartesian coordinates (x, y, z) indicative of the position of the targets, and one or more detection time instant. In more detail, in order to provide the unlabelled data 2, it is performed (in particular, by means of the virtual sensor) a conversion from polar coordinates (range, azimuth, elevation) to cartesian coordinates (x, y, z) with respect to any reference system indicative of the position of the targets. In a way of example, each unlabelled data 2 comprises a detection identifier, in detail a value assigned to the unlabelled data 2 by means of a virtual sensor, identifying said unlabelled data 2. Optionally, the unlabelled data 2 comprise an initialized or maintained track identifiers.

In addition, the electronic processing resources 4 are configured to compute candidate (or feasible) tracks 11, that may possibly be followed by the targets, based on the received unlabelled data 2. Conveniently, the classical computer 4C is configured to compute the plurality of candidate tracks 11.

According to an aspect of the present invention, the electronic processing resources 4 are configured to compute the candidate tracks 11 by permuting all the positions indicated in the unlabelled data 2.

In particular, a track maintenance module 6 is configured to update track position and velocity.

Preferably, the track maintenance module 6 is configured to compute a quality factor of a track based on an evaluation index thereof; wherein said evaluation index is computed based on a number of assignment costs of the association between a position (received from the sensors) and a candidate track 11.

Optionally, said track maintenance module 6 is designed to output information indicating one or more covariances of the, candidate or final, tracks.

It should be noted that, hereinafter, the term assignment cost refers to a factor indicative of the likelihood that a position is part of a track associable with a target. It should further be noted that, hereinafter, the term evaluation index, or the term track evaluation index, conveniently refers to a factor indicative of the likelihood that a track is the actual track followed by a target.

Optionally, the electronic processing resources 4 are configured to compute a plurality of candidate tracks 11, possibly associable to the targets, based on a satisfaction of a gating condition (block 8); in detail, based on an assignment (block 10), to a plurality of tracks, of the unlabelled data 2 that satisfy said gating condition (block 8). In particular, the electronic processing resources 4 are configured to determine whether the gating condition (block 8) is satisfied based on a comparison performed between at least one unlabelled data 2 and at least one corresponding gate of said track; in a way of example, the gate of a track is a spatial region of the environment to be monitored, within which a target is expected to be found.

In particular, the detections falling within the gate of a track are considered as candidates for the assignment (block 10) to said track.

In detail, the electronic processing resources 4 are configured to associate, or assign, (block 10) an unlabelled data 2 to a defined track based on a cost function, namely an assignment algorithm (block 13); in more detail, based on an assignment cost computed by executing said cost function.

For each unlabelled data 2 to candidate track 11 association, the electronic processing resources 4 are configured to assign (block 10) an association cost, wherein a data structure (for example, a matrix, or a vector or a dictionary), with the unlabelled data 2 to candidate track 11 association costs, is provided and conveniently stored in electronic storing resources. Preferably, the assignment algorithm (block 10) is designed to determine and to output the unlabelled data 2 to candidate track 11 association based on the association costs; in particular, to determine and to output the unlabelled data 2 to candidate track 11 association that minimize said association cost, of assignment (block 10) to a specific candidate track 11, with respect to the other different candidate tracks 11.

Optionally, the electronic processing resources 4 are configured to compute a candidate track 11 based on the received unlabelled data 2 and based on predicted spatial regions and/or positions within which a target is expected to be found. In particular, the electronic processing resources 4 are configured to compute, or predict, one or several spatial regions and/or positions, within the environment to be monitored, within which a target is expected to be found. Optionally, the electronic processing resources 4 are configured to predict the spatial regions and/or positions based on a likelihood, in particular a factor computed to be indicative of a likelihood, that a target's position is expected to be found within it; conveniently, the factor is computed to be indicative of a likelihood also based on a number of, in detail at least on, preceding determined positions. In particular, in order to compute a candidate track 11, the electronic processing resources 4 are configured to associate a position, identifiable or identified on an unlabelled data 2, with a candidate track 11 based on the predicted spatial region and/or position within which a target is expected to be found. In detail, the electronic processing resources 4 are configured to associate a position with a candidate track 11 based on a comparison performed between a position and the predicted spatial region and/or position within which a target is expected to be found. In more detail, the electronic processing resources 4 are configured to associate a position to a candidate track 11 if the position falls within the predicted spatial region and/or position of the target; wherein, the position falls within the predicted spatial region and/or position when the spatial region and/or position comprises or intersects with said position. In a way of example, the electronic processing resources 4 are configured to associate a position with a candidate track 11 if the considered position is close, if compared with a predefined threshold distance, to the predicted spatial position of the target.

In particular, the electronic processing resources 4 are configured to compute the candidate track 11 based on the one or more performed associations.

Preferably, the electronic processing resources 4, in detail the classical computer 4C, are configured to implement a filtering model (or module) 7 configured to compute a data structure comprising a number of candidate tracks 11; and conveniently, also the unlabelled data 2 to candidate track 11 association costs. In detail, the filtering model 7 is configured to filter the candidate tracks 11 information by applying a tracking filter (block 7), for example by applying a Kalman-like filter such as a linear Kalman filter. In particular, the filtering model 7 is configured to predict a number of, at least partly completed, tracks based on a current time. In addition, the filtering model 7 is configured to compute one or several values indicative of the distances between the predicted tracks and the detected positions; and to compute the associated likelihoods, in particular (log)-likelihoods, for gating (block 8) and assignment, wherein likelihoods can be any statistical measure that provide the cost of assignment of a detection to a predicted track.

In addition, the filtering model 7 is configured to modify or correct the predicted tracks using the values indicative of the distances between the predicted tracks and the detected positions. The output of the filter module 7 is a data structure that, for each considered time instant or scan, provides the association cost of all unlabelled data 2, or detections, to the candidate tracks 11.

In particular, the electronic processing resources 4, preferably the classical computer 4C, are configured to compute (block 9) a hypothesis vector (not illustrated) whose length is equal to the number of the candidate tracks 11. In detail, the electronic processing resources 4 are configured to implement an algorithm (block 12), in more detail a QUBO algorithm (block 12) (QUBO; Quadratic Unconstrained Binary Optimization), configured to compute (block 9) said hypothesis vector. Conveniently, the electronic processing resources 4 are configured to order the candidate tracks 11, for example based on a respective evaluation index; in particular, within the hypothesis vector.

In particular, after ordering the candidate tracks 11, the electronic processing resources 4 are configured to determine whether an inputted track is part of the hypothesis vector; and to assign (block 10) a value, for example a bit 1, to the i-th position of the hypothesis vector if said track is part of the hypothesis vector. Thus, all the remaining elements of the hypothesis vector are set to a different value, for example 0, meaning that the corresponding tracks are not included in the hypothesis vector; whereby, the electronic processing resources 4 are configured to compute, or construct, and to output a matrix with columns given by the candidate tracks 11 (of the hypothesis vector) and rows given by the different measurements. In detail, the hypothesis vector comprise a plurality of possible final tracks 5 that may actually be followed by the targets.

According to an aspect of the present invention, the electronic processing resources 4 are further configured to compute a weighted graph 13 comprising the candidate tracks 11 being associated with evaluation indices thereof (computed based on a cost function, in particular based on the assignment algorithm). In detail, each candidate tracks 11 is associated, within the weighted graph 13, with an evaluation index thereof. Wherein, a weighted graph 13 corresponds to a graph representation of the problem of optimization to be solved. In particular, the quantum computer 4Q is configured to compute said weighted graph 13.

In detail, the electronic processing resources 4 are configured to compute the weighted graph 13 based on the hypothesis vector and based on the evaluation indices associated with the candidate tracks 11 of the hypothesis vector.

In addition, the electronic processing resources 4 are configured to compute the weighted graph 13 by computing a number of weighted vertexes and by linking each candidate track 11 to a computed weighted vertex. In detail, the electronic processing resources 4 are configured to assign a weight, for example a numeric value, to a weighted vertex based on the respective candidate track's evaluation index. In more detail, the electronic processing resources 4 are configured to assign, to a weighted vertex, the respective candidate track's evaluation index as weight or penalty to be set. According to an aspect of the present invention, the electronic processing resources 4 are configured to determine the plurality of linked candidate tracks 11 based on a comparison between several candidate tracks 11, identified into the hypothesis vector. In particular, the electronic processing resources 4 are configured to determine the plurality of linked candidate tracks 11 based on an intersection algorithm, configured to determine if two candidate tracks 11 share at least one data point (or position); or based on a neighbouring algorithm, configured to determine if a first candidate track's point or position is close to a second candidate track's point or position (for example, the distance between the two is inferior to a predefined value).

According to a different aspect of the present invention, the electronic processing resources 4 are configured to determine the plurality of linked candidate tracks 11, preferably that satisfy a predefined condition, based on the computed weighted graph 13. In detail, the electronic processing resources 4 are configured to determine the plurality of linked candidate tracks 11 based on a graph algorithm designed to determine whether two candidate tracks 11, represented by different weighted graph's weighted vertexes, share at least one data point thereof. Conveniently, the electronic processing resources 4 are configured to compute the maximum independent set in the computed weighted graph 13 based on the linked candidate tracks 11; in detail, an independent set comprises only linked candidate tracks 11. Preferably, a weighted graph 13 establishes an equivalence between solving the multiple target tracking (MTT) problem and identifying the maximum independent set in said graph representation.

In particular, the electronic processing resources 4 are configured to provide a formalization of the integer programming problem into the quantum formalism; preferably, in a way that is compatible with any quantum computer 4Q.

The electronic processing resources 4 are further configured to compute, based on the candidate tracks 11, an initial quantum state representative of said candidate tracks 11; in detail, the initial quantum state encodes a plurality of candidate tracks 11.

In particular, the electronic processing resources 4 are configured to perform an encoding of a data, indicative of the candidate tracks 11, in a quantum state (in detail, the initial quantum state) based on an encoding module configured to compute the quantum state based on the candidate tracks 11.

Preferably, the electronic processing resources 4 are configured to compute the initial quantum state based on the computed weighted graph 13. In particular, said data indicative of the plurality of candidate tracks 11 is the weighted graph 13; alternatively, the electronic processing resources 4 are configured to compute said data, indicative of the candidate tracks 11, based on the weighted graph 13 or optionally based on the hypothesis vector.

According to the preferred embodiment of the present invention, the computation of a quantum state causes each candidate track 11 to be represented, or encoded, by one qubit of said quantum state. In order to compute the initial quantum state, the electronic processing resources 4 are configured to encode each candidate track 11 into one qubit of the initial quantum state. Thereby, for a number N of candidate tracks 11 a N-qubit quantum computer 4Q is required, with N being an integer higher than 0.

According to an aspect of the present invention, the computation of a quantum state is performed by means of the quantum computer 4Q.

According to a different aspect of the present invention, the computation of a quantum state is performed via the classical computer 4C.

It's worth noting that the multi-target tracking software 3 for the multi-target tracking system 1 can be executed in any quantum computer's 4Q type. In general, in superconducting and atomic platforms, the electronic processing resources 4 are configured, in order to become designed to execute the quantum optimization model 14, to implement an algorithm in the so-called gate-based framework, wherein a set of logical gates: CNOT, RZ, H. In this context, the multi-target tracking software 3 of the multi-target tracking system 1 provides the expression in the gate-based model of the multi-target tracking, thus is designed to be compatible with superconducting and atomic hardware.

Furthermore, the multi-target tracking software 3 is also compatible with photonic platforms. In detail, the electronic processing resources 4 are configured to implement, or execute, a method to map gate-based logical circuits into the so-called measurement-based quantum computing framework, which is compatible with photonic platforms. Conveniently, said method is described in "Native measurement-based quantum approximate optimization algorithm applied to the Max K-Cut problem." of Proietti, Massimiliano, Filippo Cerocchi, and Massimiliano Dispenza.

In addition, the electronic processing resources 4 are configured to compute, by means of a quantum optimization model (14) a final quantum state representative of final tracks 5, that may actually be followed by the targets, based on the initial quantum state.

In detail, the electronic processing resources 4 are configured to implement the quantum optimization model 14 to compute a final quantum state based on an initial quantum state. In particular, the quantum computer 4Q is configured to compute the final quantum state, encoding the final tracks 5, based on the initial quantum state by means of the quantum optimization model 14; wherein, in detail, the quantum optimization model 14 is configured to perform an evolution of the initial quantum state based on a loss function.

In particular, the final quantum state, after the evolution performed by means of the quantum optimization model 14, will be a quantum superposition of a number N of qubits.

In detail, the qubits represent the candidate tracks 11 and the values of said qubits is indicative of the presence, or the absence, of said candidate tracks 11 within the final tracks 11 (in more detail within the hypothesis vector). In a way of example, the qubits with value corresponding to 1 represent, or encode, possible final tracks 5. In a way of example, the qubits with value corresponding to 0 represent, or encode, candidate tracks 11 not included in the final tracks 5.

Preferably, the quantum optimization model 14, in order to compute the final quantum state to encode the final tracks 5, is configured to modify one or more qubits of the initial quantum state to cause said qubits to be further indicative of the absence of the corresponding candidate track 11 within the final tracks 5. Specifically, the quantum optimization model 14 is designed to identify the candidate tracks 11 that are likely to be final tracks 5; and to filter out the candidate tracks 11 that are unlikely to be final tracks 5 by modifying the respective qubits to eliminate them from the potential final tracks 5.

In detail, the quantum optimization model 14 is configured to compute a final quantum state by running and measuring many times the N qubits; at each step, the quantum optimization model 14 is configured to modify, or process, the initial quantum state based on the loss function (block 15) in order to minimise a loss computed based on the loss function (block 15). According to an aspect of the present invention, the quantum optimization model 14 is configured to change some setting of the quantum computer 4Q such that the computed loss is minimised. After many rounds, the quantum state (in detail the final quantum state) converges to the solution of the MTT problem. In a way of example, the quantum optimization model 14 is configured to modify one or more qubits of the initial quantum state based on a predefined loss function (block 15) configured to determine the probability of the presence of a candidate track 11 in the final tracks 5.

According to a preferred aspect of the present invention, the quantum optimization model 14 is configured to compute a final quantum state by performing an Hamiltonian unitary evolution on an initial quantum state.

Optionally, the quantum optimization model 14 is configured to compute the final quantum state by performing a different quantum optimization algorithm on the initial quantum state. In particular, said quantum optimization algorithm could be one between the Quantum Approximate Optimization Algorithm (QAOA) or the Variational quantum eigensolver (VQE).

In detail, the parametrized loss function (block 15) is based on the Hamiltonian formula that describes the quantum optimization model 14.

The Hamiltonian describing the quantum optimisation is the following:

$$H_{Total} = \frac{c_i}{2}I^{\otimes n} - \sum_{i}^{T} \frac{c_i}{2}Z^i - P\sum_{i \neq j}^{T} R_{ij}(c_i Z^i + c_j Z^j) + P\sum_{i \neq j}^{T} R_{ij} c_i c_j Z^i Z^j$$

Where $c_i$ are the costs of tracks i, I is the identity matrix, Z is the Pauli Z matrix, P is the penalty coefficient and $R_{ij}$ encodes the coupling of tracks i and j. The quantum optimization model 14 is therefore stated as:

$$\min_{\tau \in F} \langle \tau | H_c - H_p | \tau \rangle$$

Where $H_{Total} = H_c - H_p$ with all the constraints of the problem encoded in $H_p$; the quantum state which minimizes the Hamiltonian energy takes the following form:

$$\tau = \left| 0,0,1,0,1,0 \ldots ,1 \right\rangle$$

Wherein

- 1 is associated to a track included in the hypothesis vector, or
- 0 is associated to a track not included in the hypothesis vector.

According to a preferred embodiment of the present invention, the final quantum state is computed, by implementing the quantum optimization model 14, on the quantum computer 4Q.

Preferably, the electronic processing resources 4 are configured to compute the final tracks 5 by means of a classical computing hardware in loop with a quantum computing hardware; in particular, by executing in loop the optimization (both the quantum optimization and the classical one) until convergence, of a certain value indicative of the cost of a candidate track 11, is reached. In particular, the electronic processing resources 4 are configured to perform an optimization step, one or both the quantum optimization and the classical one, as far as a loop condition is satisfied. In particular, the loop condition is determined to be satisfied when at least one of the evaluation indices computed for the tracks is inferior (or alternatively higher) than a predefined threshold.

The multi-target tracking system 1 is based on a classical hardware (HW) that, via an optimization loop, allows a quantum HW to perform the optimization to provide a probabilistic output.

According to the embodiment of the present invention wherein the electronic processing resources 4 further comprise a classical computer 4C, the electronic processing resources 4 are configured, in order to compute the final tracks 5, to alternately execute:

- a quantum optimization, performed by means of the quantum computer 4Q, based on the quantum optimization model 14 and an input thereof; and
- a classical optimization, performed by means of the classical computer 4C, based on a classical optimization model 16 and an input thereof.

In detail, the classical optimization model 16 is configured to compute a data indicative of, or comprising, the candidate tracks 11 based on a classical optimization algorithm. In more detail, the classical optimization (block ) model relies on a gradient-free based on the Constrained Optimization By Linear Approximations (COBYLA). In particular, COBYLA is an optimization algorithm designed for solving nonlinear, constrained, optimization problems. In detail, COBYLA does not require the computation of gradients of the objective or constraint functions, but it relies on linear approximations to guide the search for the optimization.

In particular, COBYLA is useful in situations where the objective or constraint functions are expensive to evaluate, noisy, or lack analytical derivatives. For example, it has been successfully applied in various optimization problems, including engineering design, parameter estimation, and simulation-based optimization. In general, this optimization algorithm facilitates convergence outside the Barren Plateaux of the cost function.

Optionally, the classical optimization algorithm is one between SLSQP (Sequential Least Squares Quadratic Programming), L-BFGS-B (Limited-memory Broyden-Fletcher-Goldfarb-Shanno with Bounds), or CCSA (Constrained Complex Step Approximation).

In particular, the electronic processing resources 4 are further configured to alternately execute:

- an encoding of a data, indicative of the candidate tracks 11, in a quantum state; and a quantum optimization of said encoding based on the quantum optimization model 14; and
- a decoding of a received quantum state in a data indicative of the candidate tracks 11; and a classical optimization of said decoding based on the classical optimization model 16.

In particular, the electronic processing resources 4 are configured to perform an encoding of the data, indicative of the candidate tracks 11 in the respective quantum state based on the encoding module; in detail, in order to encode the data into an Hamiltonian form. In detail, the electronic processing resources 4 are configured to design, or modify, a quantum circuit required for the Hamiltonian optimization.

According to an aspect of the present invention, the electronic processing resources 4 are configured to perform a decoding of a quantum state in a data indicative of the candidate tracks 11 based on a decoding module, in particular opposite to the encoding module. In detail, the decoding module is configured to obtain, or compute, a track to be represented into said decoded data based on one qubit of the quantum state.

In particular, according to said aspect of the present invention, the electronic processing resources 4 are configured to compute or obtain a data indicative of, or comprising, a plurality of optimized candidate tracks 11 by performing, based on the decoding module, a decoding of a final quantum state. Said optimized candidate tracks 11 being obtained by means of an optimization, or at least one step of optimization, performed using the quantum optimization model 14.

The electronic processing resources 4 are configured to determine the final tracks 5 based on the candidate tracks 11 by means of the quantum optimization model 14.

Preferably, the electronic processing resources 4 are configured to select the final tracks 5 between the candidate tracks 11 by means of the quantum optimization model 14. In detail, the electronic processing resources 4 are configured to select the final tracks 4 based on the final quantum state (in particular, based on the qubits of the final quantum state). In particular, the electronic processing resources 4 are configured to select the final tracks 5 between the optimized candidate tracks 11 determined by decoding the final quantum state. In detail, optionally, the electronic processing resources 4 are configured to compute the final tracks 5 based on the computed optimized candidate tracks 11. Optionally, the electronic processing resources 4 are configured to compute an evaluation index for each optimized candidate track 11 based on the assignment algorithm (block 10); and to determine the final tracks 5 also based on said evaluation indices. In a way of example, the electronic processing resources 4 are configured to select the final tracks 5, between the optimized candidate tracks 11, with the highest evaluation indices associated thereof.

According to a different aspect of the present invention, the electronic processing resources 4 are configured to compute the final tracks 5 by performing one or more mathematical operations on the optimized candidate tracks 11. In a way of example, the electronic processing resources 4, in order to obtain the final tracks 5, are configured to perform a weighted average on the optimized candidate tracks 11; in detail, where the electronic processing resources 4 are configured to weight, or modify, the optimized candidate tracks 11 based on the respective computed evaluation indices.

In addition, conveniently, the electronic processing resources 4 are configured to execute one or more between a confirmation, and a deletion of final tracks 5 based on the implemented track maintenance module 6. In detail, the electronic processing resources 4 are further configured to confirm, or delete, a final track 5 based on the respective evaluation index; in more detail, based on a comparison between said evaluation index and one or more predefined, confirmation or deletion, threshold. In a way of example, the electronic processing resources 4 are configured to confirm a final track 5 when its evaluation index is determined to be higher than a predefined confirmation threshold. In a way of example, the electronic processing resources 4 are configured to delete a final track 5 when its evaluation index is determined to be lower than a predefined deletion threshold.

Furthermore, the electronic processing resources 4 are configured to compute and output a multi-target tracking output based on the final quantum state.

In particular, the electronic processing resources 4 are configured to determine the final tracks 5 based by decoding the final quantum state; and to output, as multi-target tracking output, said final tracks 4.

In particular, the electronic processing resources 4 are configured to determine (or select between the final tracks 5), for each target, a respective final track 5 based on the final quantum state.

In particular, the electronic processing resources 4 are configured to associate each target to a respective final track 5 based on the final quantum state; and output, as multi-target tracking output, the final tracks 5 associated to the target.

In particular, said multi-target tracking output comprises one or more representations, in particular graphic representations (for example, one or more images and/or one video), of the computed final tracks 5.

Optionally, displaying electronic resources, in particular a computer's monitor, are configured to display, in order to render the latter appreciable to a user, said representations; in detail, in the same format with respect to the unlabelled data 2 or to the detected scans.

The present invention presents a plurality of advantages.

The quantum optimization model 14 according to the present invention is based on a number of qubits which scales linearly with the number of the candidate tracks 11; thereby, in complex multi-target tracking scenarios, large-scale quantum computers can find a solution with relatively limited computational resources.

Furthermore, the Applicant notes that the present invention allows to find, in a finite time, a solution for the quantum optimization model 14.

In addition, the present invention enables real-time multi-target tracking in scenarios generally classifiable as highly complex scenarios.

The Applicant further notes that a development of a radar system employing the multi-target tracking system 1 is configured to track target in those cases where standard trackers fail.

In addition, the electronic processing resources 4 are configured to execute the multi-target tracking software 3, of the present invention, for any number of radar scans on any universal quantum computer 4Q.

In conclusion, it is clear that numerous modifications and variants can be made to the present invention, all falling within the scope of the invention, as defined in the appended claims.

**Claims**

1. Multi-target tracking software (3) loadable in and executable by electronic processing resources (4) comprising at least one quantum computer (4Q); the multi-target tracking software (3) being designed to cause, when executed, the electronic processing resources (4) to become configured to:

   - receive unlabelled data (2) indicative of positions of targets, in particular vehicles, to be tracked; the unlabelled data (2) failing to be indicative of the identities of the targets;
   - compute candidate tracks (11), that may possibly be followed by the targets, based on the received unlabelled data (2);
   - compute an initial quantum state representative of said candidate tracks (11);
   - compute, by means of a quantum optimization model (14), a final quantum state representative of final tracks (5), that may actually be followed by the targets, based on the initial quantum state; and
   - compute and output a multi-target tracking output based on the final quantum state.

2. Multi-target tracking software (3) according to any one of the preceding claims, and configured to cause, when executed, the electronic processing resources (4) to become configured to select the final tracks (5) between the candidate tracks (11) by means of the quantum optimization model (14).

3. Multi-target tracking software (3) according to claim 1 or claim 2, and configured to cause, when executed, the electronic processing resources (4) to become configured to:

   - associate each target to a respective final track (5) based on the final quantum state; and
   - output, as multi-target tracking output, the final tracks (5) associated to targets.

4. Multi-target tracking software (3) according to any one of the preceding claims, and configured to cause, when executed, the electronic processing resources (4), in order to compute the initial quantum state, to become configured to encode each candidate track (11) into one qubit of the initial quantum state.

5. Multi-target tracking software (3) according to claim 4, wherein the quantum optimization model (14), in order to compute the final quantum state to encode the final tracks (5), is configured to modify one or more qubits of the initial quantum state to cause said qubits to be further indicative of the absence of the corresponding candidate track (11) within the final tracks (5).

6. Multi-target tracking software (3) according to claim 4 or claim 5, wherein the quantum optimization model (14) is configured to compute the final quantum state by performing an Hamiltonian unitary evolution on the initial quantum state.

7. Multi-target tracking software (3) according to one of the preceding claims, wherein the electronic processing resources (4) further comprise a classical computer (4C); and wherein the multi-target tracking software (3) is configured to cause, when executed, the electronic processing resources (4) to become configured, in order to compute the final tracks (5), to alternately execute:

   - a quantum optimization, performed by means of the quantum computer (4Q), based on the quantum optimization model (14) and an input thereof; and
   - a classical optimization, performed by means of the classical computer (4C), based on a classical optimization model (16) and an input thereof.

8. Multi-target tracking software (3) according to claim 7, and configured to cause, when executed, the electronic processing resources (4) to become configured to alternately execute:

   - an encoding of a data, indicative of the candidate tracks (11), in a quantum state; and a quantum optimization of said encoding based on the quantum optimization model (14); and
   - a decoding of a received quantum state in a data indicative of the candidate tracks (11); and a classical optimization of said decoding based on the classical optimization model (16).

9. Multi-target tracking software (3) according to one of the preceding claims, and designed to cause, when executed, the electronic processing resources (4) to become configured to:

- compute a weighted graph (13) comprising the candidate tracks (11) being associated with evaluation indices thereof; and
- compute the initial quantum state based on the computed weighted graph (13).

10. Multi-target tracking system (1) comprising:

- one quantum computer (4Q); and
- the multi-target tracking software (3) according to one of any preceding claims 1-9.

FIG.1

FIG.2

3

15 Cost function

16 Classical optimization

Loop until converges

14 Quantum algorithm

13 Graph description

12 QUBO

11 Association cost

10 Assignment

MTT solution

9 Multiple hypotesis formation

Tracce fattibili

8 Gating

6 Track maintenance: inizialization confirmation and deletion

Updated track hypotesis

Tracks info (covariances)

7 Filtering: correction and prediction

4C — Classical Computer

16 — Classical Optimization

12 — QUBO

11 — Feasible Tracks

7 — Kallman-Filter

2 — Data from radar

5 — Multi-Target Tracking Solution

4Q — Quantum Computer

Converges

15 — Parametrized Cost function

14 — Quantum Algorithm (parametrized)

13 — Graph Description

FIG.3

Europäisches
Patentamt

European
Patent Office

Office européen
des brevets

# EUROPEAN SEARCH REPORT

**Application Number**

EP 24 21 3028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/244979 A1 (MASKIL NISSAN [IL] ET AL) 3 August 2023 (2023-08-03)<br>* paragraph [0001] - paragraph [0071] *<br>* figures 1-5 * | 1-10 | INV.<br>G06N10/60 |
| A,P | YASUYUKI IHARA: "Enhancing Multiple Object Tracking Accuracy via Quantum Annealing",<br>ARXIV.ORG, CORNELL UNIVERSITY LIBRARY, 201 OLIN LIBRARY CORNELL UNIVERSITY ITHACA, NY 14853,<br>27 March 2024 (2024-03-27), XP091712961,<br>* abstract *<br>* page 1 - page 6 * | 1-10 | |
| A | MCCORMICK TIMOTHY M ET AL: "Implementation of a Multiple Target Tracking Filter on an Adiabatic Quantum Computer",<br>2022 IEEE AEROSPACE CONFERENCE (AERO), IEEE,<br>5 March 2022 (2022-03-05), pages 1-14, XP034164414,<br>DOI: 10.1109/AERO53065.2022.9843451<br>* 1- 3, 8 * | 1-10 | |
| | | | **TECHNICAL FIELDS SEARCHED (IPC)**<br>G06N |
| A | SEONG-WOOK JOO ET AL: "A Multiple-Hypothesis Approach for Multiobject Visual Tracking",<br>IEEE TRANSACTIONS ON IMAGE PROCESSING, IEEE, USA,<br>vol. 16, no. 11,<br>1 November 2007 (2007-11-01), pages 2849-2854, XP011193293,<br>ISSN: 1057-7149, DOI: 10.1109/TIP.2007.906254<br>* abstract *<br>* page 2849 - page 2852 * | 1-10 | |

The present search report has been drawn up for all claims

| Place of search | Date of completion of the search | Examiner |
|---|---|---|
| The Hague | 3 February 2025 | Keresztury, Bence |

EPO FORM 1503 03.82 (P04C01)

## ANNEX TO THE EUROPEAN SEARCH REPORT
## ON EUROPEAN PATENT APPLICATION NO.

EP 24 21 3028

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2025

| Patent document cited in search report | Publication date | Patent family member(s) | | Publication date |
|---|---|---|---|---|
| US 2023244979 A1 | 03-08-2023 | AU | 2023200169 A1 | 17-08-2023 |
| | | CA | 3187466 A1 | 30-07-2023 |
| | | EP | 4220497 A1 | 02-08-2023 |
| | | IL | 290224 A | 01-01-2025 |
| | | US | 2023244979 A1 | 03-08-2023 |

EPO FORM P0459

For more details about this annex : see Official Journal of the European Patent Office, No. 12/82

**REFERENCES CITED IN THE DESCRIPTION**

**Patent documents cited in the description**

- EP 23210590
- EP 23213307
- IT 102024000017473